# EUROPEAN PATENT APPLICATION

(11) **EP 1 980 932 A2**
(43) Date of publication of application: **15.10.2008**
(21) Application number: 08007039.4
(22) Date of filing: 09.04.2008
(51) Int. Cl.: G06F 1/28

(54) **Protection circuit and electronic device**

(30) Priority: 12.04.2007 JP 2007104826
(71) Applicant: Funai Electric Co., Ltd., Daito-shi Osaka 574-0013 (JP)
(72) Inventor: Kamizawa, Koji, Daito-shi Osaka 574-0013 (JP)
(74) Representative: Erny, Tobias

(57) **Abstract**

A protection circuit (10) has: a microcomputer (11) that, on receiving a signal indicating that a power supply circuit (20) connected to it is in an abnormal state, transmits a first protection signal to thereby bring the power supply circuit (20) into a protected state; and a microcomputer protector (12) that, on receiving a signal indicating that the microcomputer (11) is in a no-operation-clock state, transmits a second protection signal to thereby bring the power supply circuit (20) into a protected state.

## Description

### BACKGROUND OF THE INVENTION

### 1. Field of the Invention

The present invention relates to a protection circuit having a microcomputer that, on receiving a signal indicating that a circuit connected to it is in an abnormal state, transmits a protection signal to thereby perform a protection operation to cope with the abnormal state of the circuit. The invention also relates to an electronic device having such a protection circuit.

### 2. Description of Related Art

In a television receiver, if its power supply circuit, power amplifier circuit, or the like gets into an abnormal state, as when an overcurrent is occurring, it may cause secondary destruction of another circuit, or smoking or burning. For this reason, such circuits are generally connected to a protection circuit having a microcomputer that, on receiving a signal indicating that a circuit connected to it is in an abnormal state, transmits a protection signal to thereby perform a protection operation to cope with the abnormal state of the circuit.

For example, JP-A-H10-243252 discloses a television receiver having: a power supply circuit having a flyback transformer; and a protection circuit having a microcomputer that, on receiving a signal indicating that the power supply circuit is in a short-circuited state (i.e. a signal indicating a drop in the output voltage of the flyback transformer), transmits a protection signal to thereby shut down the power supply circuit. This makes it possible to prevent secondary destruction of another circuit, or smoking or burning, caused by short-circuiting in the power supply circuit.

What should be noted here is that the protection circuit provided in this television receiver, on receiving a signal indicating that the power supply circuit connected to it is in a short-circuited state, transmits a protection signal to thereby shut down the power supply circuit. Consequently, in a case where the microcomputer is in an abnormal state, as when the core voltage of the microcomputer has dropped as a result of short-circuiting-induced destruction of a component, even if the connected power supply circuit is short-circuited, the power supply circuit cannot be shut down. Thus, inconveniently, it is impossible to prevent secondary destruction of another circuit, or smoking or burning, caused by short-circuiting in the power supply circuit.

### SUMMARY OF THE INVENTION

In view of the inconveniences mentioned above, it is an object of the present invention to provide a protection circuit that can prevent secondary destruction of another circuit, or smoking or burning, caused by an abnormal state of a circuit connected to it even when a microcomputer is in an abnormal state, and it is also an object of the invention to provide an electronic device having such a protection circuit.

To achieve the above objects, according to one aspect of the invention, an electronic device is provided with: a power supply circuit that feeds electric power to individual constituent circuits; and a protection circuit that is connected to the power supply circuit and that has a microcomputer that, on receiving a signal indicating that the power supply circuit is in an abnormal state, transmits a first protection signal to thereby perform a protection operation to cope with the abnormal state of the power supply circuit. Here, the protection circuit further is further provided with: a microcomputer protector that, on receiving a signal indicating that the microcomputer is in a no-operation-clock state in which no operation clock of the microcomputer is present, transmits, to the same constituent circuit to which the first protection signal is transmitted, a second protection signal identical with the first protection signal to thereby perform a protection operation to cope with the no-operation-clock state of the microcomputer. Moreover, the first protection signal and the second protection signal are identical signals that are transmitted to the same constituent circuit.

To achieve the above objects, according to another aspect of the invention, a protection circuit is provided with: a microcomputer that, on receiving a signal indicating that a circuit connected thereto is in an abnormal state, transmits a first protection signal to thereby perform a protection operation to cope with the abnormal state of the circuit. Here, the protection circuit is further provided with: a microcomputer protector that, on receiving a signal indicating that the microcomputer is in an abnormal state, transmits a second protection signal to thereby perform a protection operation to cope with the abnormal state of the microcomputer.

A protection circuit according to the invention has a microcomputer protector that performs a protection operation to cope with an abnormal state of a microcomputer. Thus, in a protection circuit in which a microcomputer performs a protection operation to cope with an abnormal state of a circuit connected, even when the microcomputer is in an abnormal state, as when the core voltage of the microcomputer has dropped as a result of short-circuit-inducted destruction of a component, it is possible to prevent secondary destruction of another circuit, or smoking or burning, caused by the abnormal state of the circuit connected.

To achieve the above objects, in the above protection circuit according to the invention, the microcomputer protector may be so configured that it, on receiving a signal indicating that the microcomputer is in a no-operation-clock state in which no operation clock of the microcomputer is present, transmits the second protection signal to thereby perform a protection operation to cope with the no-operation-clock state of the microcomputer.

A protection circuit according to the invention has a microcomputer protector that performs a protection operation to cope with a no-operation-clock state of a microcomputer. Thus, in a protection circuit in which a microcomputer performs a protection operation to cope with an abnormal state of a circuit connected, even when no operation clock of the microcomputer is present, as when the core voltage of the microcomputer has dropped as a result of short-circuit-inducted destruction of a component, it is possible to prevent secondary destruction of another circuit, or smoking or burning, caused by the abnormal state of the circuit connected.

To achieve the above objects, in the above protection circuit according to the invention, the first protection signal and the second protection signal may be identical signals that are transmitted to the same constituent circuit.

In a protection circuit according to the invention, the first protection signal that a microcomputer transmits when a circuit connected is in an abnormal state and a second protection signal that a microcomputer protector transmits when the microcomputer is in an abnormal state are identical signals that are transmitted to the same constituent circuit. Thus, in a protection circuit in which a microcomputer performs a protection operation to cope with an abnormal state of a circuit connected, even when the microcomputer is in an abnormal state, as when the core voltage of the microcomputer has dropped as a result of short-circuit-inducted destruction of a component, it is possible to prevent secondary destruction of another circuit, or smoking or burning, caused by the abnormal state of the circuit connected, and this can be achieved without adding an extra constituent element such as a port to the circuit connected.

### BRIEF DESCRIPTION OF THE DRAWINGS

Fig. 1 is a block diagram showing an outline of the configuration of an electronic device; and
Fig. 2 is a circuit diagram showing an example of the circuit configuration of a microcomputer protector.

### DETAILED DESCRIPTION OF PREFERRED EMBODIMENTS

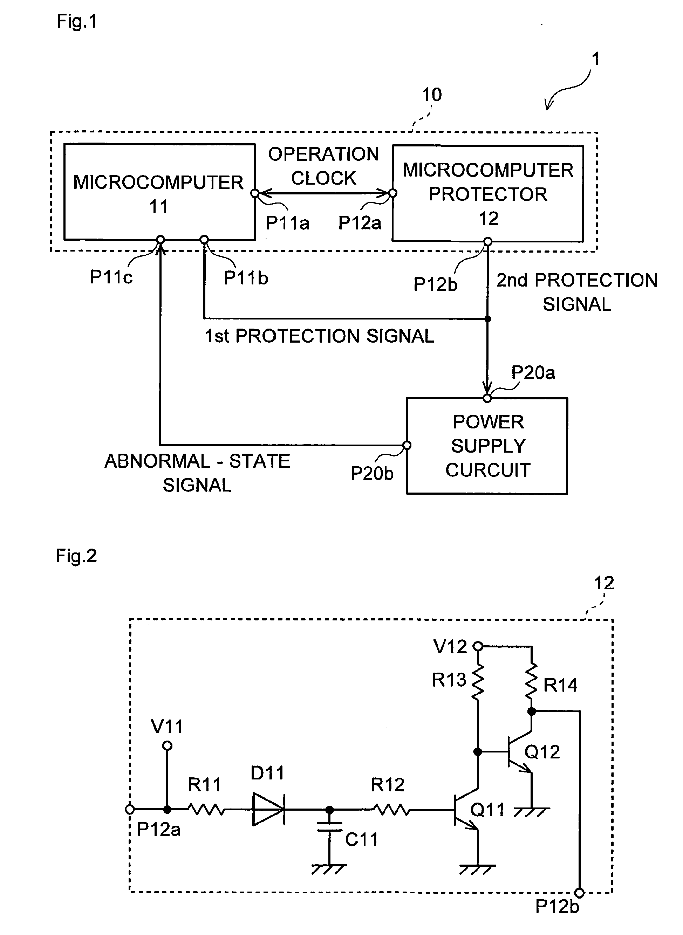

Hereinafter, an embodiment of the invention will be described in detail with reference to the accompanying drawings. Fig. 1 is a block diagram showing an outline of the configuration of an electronic device embodying the invention. The electronic device 1 has a protection circuit 10 and a power supply circuit 20 (circuit). The power supply circuit 20 feeds electric power to the individual constituent circuits of the electronic device 1. The protection circuit 10 has a microcomputer 11 and a microcomputer protector 12.

The microcomputer 11 has ports P11a and P11b. From the port P11a, the microcomputer 11 transmits its operation clock to a port P 12a of the microcomputer protector 12. From the port P11b, the microcomputer 11 transmits a first protection signal to a port P20a of the power supply circuit 20. The microcomputer protector 12 has another port P12b, from which it transmits a second protection signal to the port P20a of the power supply circuit 20. The power supply circuit 20 has another port P20b, from which it transmits an abnormal-state signal to another port P11c of the microcomputer 11.

Here, the first protection signal that the microcomputer 11 transmits from its port P11b to the port P20a of the power supply circuit 20 is a control signal that brings the power supply circuit 20 into a protected state. The second protection signal that the microcomputer protector 12 transmits from its port P12b to the port P20a of the power supply circuit 20 is a control signal that brings the power supply circuit 20 into a protected state. The abnormal-state signal that the power supply circuit 20 transmits from its port P20b to the port P11c of the microcomputer 11 is a signal indicating that the power supply circuit 20 is in an abnormal state. An abnormal state of the power supply circuit 20 occurs, for example, when an overcurrent is occurring as a result of short circuiting.

Now, how the protection circuit 10 operates when the power supply circuit 20 gets into an abnormal state will be described in outline. When the power supply circuit 20 gets into an abnormal state, the power supply circuit 20 transmits, from its port P20b to the port P11c of the microcomputer 11, an abnormal-state signal indicating that the power supply circuit 20 is in an abnormal state. The microcomputer 11, on receiving, at its port P11c, the abnormal-state signal indicating that the power supply circuit 20 is in an abnormal state, transmits, from its port P11b to the port P20a of the power supply circuit 20, a first protection signal that brings the power supply circuit 20 into a protected state. Thus, the power supply circuit 20 is brought into a protected state.

Next, how the protection circuit 10 operates when the operation clock of the microcomputer 11 ceases to be present will be described in outline. When the operation clock of the microcomputer 11 ceases to be present, the microcomputer 11 transmits, from its port P11a to the port P12a of the microcomputer protector 12, a signal indicating that no operation clock of the microcomputer 11 is present. Thus, when the operation clock of the microcomputer 11 ceases to be present, the microcomputer protector 12 receives, at its port P 12a, the signal indicating that no operation clock of the microcomputer 11 is present. On receiving the signal indicating that no operation clock of the microcomputer 11 is present, the microcomputer protector 12 transmits, from its port P12b to the port P20a of the power supply circuit 20, a second protection signal that brings the power supply circuit 20 into a protected state. Thus, the power supply circuit 20 is brought into a protected state.

As described above, in the electronic device 1, when the operation clock of the microcomputer 11 ceases to be present, the microcomputer protector 12 transmits a second protection signal and thereby brings the power supply circuit 20 into a protected state. Thus, even when no operation clock of the microcomputer 11 is present, as when the core voltage of the microcomputer 11 has dropped as a result of short-circuiting-induced destruction of a component, it is possible to prevent secondary destruction of another circuit, or smoking or burning, caused by the abnormal state of the power supply circuit 20.

Moreover, in the electronic device 1, the first protection signal that the microcomputer 11 transmits from its port P11b and the second protection signal that the microcomputer protector 12 transmits from its port P12b are transmitted to the same constituent circuit (the port P20a of the power supply circuit 20). Thus, when the first protection signal that the microcomputer 11 transmits from its port P11b and the second protection signal that the microcomputer protector 12 transmits from its port P12b are identical signals, then the protected state into which the power supply circuit 20 is brought when the operation clock of the microcomputer 11 ceases to be present is identical with the protected state into which the power supply circuit 20 is brought when the power supply circuit 20 gets into an abnormal state. Thus, even when no operation clock of the microcomputer 11 is present, as when the core voltage of the microcomputer 11 has dropped as a result of short-circuit-inducted destruction of a component, it is possible to prevent secondary destruction of another circuit, or smoking or burning, caused by the abnormal state of the power supply circuit 20, and this can be achieved without adding an extra constituent element such as a port to the circuit connected.

Next, an example of the circuit configuration of the microcomputer protector 12 will be described. Fig. 2 is a circuit diagram showing an example of the circuit configuration of the microcomputer protector 12. In a case where the electronic device 1 has a microcomputer protector 12 having the circuit configuration shown in Fig. 2, the microcomputer 11, on receiving, at its port P11c, an abnormal-state signal indicating that the power supply circuit 20 is in an abnormal state, transmits, from its port P11b to the port P20a of the power supply circuit 20, a low-level signal as the first protection signal that brings the power supply circuit 20 into a protected state, and this brings the power supply circuit 20 into a protected state.

In the microcomputer protector 12 shown in Fig. 2, the port P12a is connected to a direct-current power source V11 and to one end of a resistor R11. The other end of the resistor R11 is connected to the anode of a diode D11. The cathode of the diode D11 is connected to one end of a capacitor C11 and to one end of a resistor R12. The other end of the capacitor C11 is grounded. The other end of the resistor R12 is connected to the base of an npn-type transistor Q11.

The emitter of the transistor Q11 is grounded, and the collector of the transistor Q11 is connected to the base of an npn-type transistor Q12 and to one end of a resistor R13. The other end of the resistor R13 is connected to one end of a resistor R14 through a direct-current power source V12. The other end of the resistor R14 is connected to the collector of the transistor Q12. The collector of the transistor Q12, along with the end of the resistor R14 connected to it, is connected to the port P12b. The emitter of the transistor Q12 is grounded.

Now, how the microcomputer protector 12 operates when the operation clock of the microcomputer 11 is present normally will be described in outline. In this state, the microcomputer protector 12 receives, at its port P12a, the operation clock of the microcomputer 11 as a signal indicating that the operation clock of the microcomputer 11 is present normally. This raises the base voltage of the transistor Q11, bringing it into an on state, and this in turn brings the transistor Q12 into an off state. Thus, the microcomputer protector 12 transmits, from its port P12b to the port P20a of the power supply circuit 20, a high-level signal.

Next, how the microcomputer protector 12 operates when the operation clock of the microcomputer 11 ceases to be present will be described in outline. In this state, the microcomputer protector 12 receives, at its port P12a, a low-level signal as a signal indicating that no operation clock of the microcomputer 11 is present. This lowers the base voltage of the transistor Q11, bringing it into an off state, and this in turn brings the transistor Q12 into an on state. Thus, the microcomputer protector 12 transmits, from its port P12b to the port P20a of the power supply circuit 20, a low-level signal.

Having the circuit configuration shown in Fig. 2, the microcomputer protector 12, when the operation clock of the microcomputer 11 ceases to be present, transmits a low-level signal from its port P12b to the port P20a of the power supply circuit 20 and thereby brings the power supply circuit 20 into a protected state. Thus, even when no operation clock of the microcomputer 11 is present, as when the core voltage of the microcomputer 11 has dropped as a result of short-circuit-inducted destruction of a component, it is possible to prevent secondary destruction of another circuit, or smoking or burning, caused by the abnormal state of the power supply circuit 20.

Moreover, in the electronic device 1 having the microcomputer protector 12 having the circuit configuration shown in Fig. 2, the first protection signal that the microcomputer 11 transmits from its port P11b and the second protection signal that the microcomputer protector 12 transmits from its port P12b are identical signals (low-level signals) transmitted to the same constituent circuit (the port P20a of the power supply circuit 20). Thus, the protected state into which the power supply circuit 20 is brought when the operation clock of the microcomputer 11 ceases to be present is identical with the protected state into which the power supply circuit 20 is brought when the power supply circuit 20 gets into an abnormal state. Thus, even when no operation clock of the microcomputer 11 is present, as when the core voltage of the microcomputer 11 has dropped as a result of short-circuit-inducted destruction of a component, it is possible to prevent secondary destruction of another circuit, or smoking or burning, caused by the abnormal state of the power supply circuit 20, and this can be achieved without adding an extra constituent element such as a port to the circuit connected.

It should be understood that the present invention may be carried out in any manner other than specifically described above as an embodiment, and many variations and modifications are possible within the spirit of the invention. For example, the microcomputer protector 12 may have any circuit configuration other than that shown in Fig. 2.

The invention is effective in a protection circuit having a microcomputer that, on receiving a signal indicating that a circuit connected to it is in an abnormal state, transmits a protection signal to thereby perform a protection operation to cope with the abnormal state of the circuit; the invention is also effective in an electronic device having such a protection circuit.

## Claims

1. An electronic device having:
a power supply circuit that feeds electric power to individual constituent circuits; and
a protection circuit that is connected to the power supply circuit and that has a microcomputer that, on receiving a signal indicating that the power supply circuit is in an abnormal state, transmits a first protection signal to thereby perform a protection operation to cope with the abnormal state of the power supply circuit,
wherein the protection circuit further has:
a microcomputer protector that, on receiving a signal indicating that the microcomputer is in a no-operation-clock state in which no operation clock of the microcomputer is present, transmits, to a same constituent circuit to which the first protection signal is transmitted, a second protection signal identical with the first protection signal to thereby perform a protection operation to cope with the no-operation-clock state of the microcomputer.

2. A protection circuit having:
a microcomputer that, on receiving a signal indicating that a circuit connected thereto is in an abnormal state, transmits a first protection signal to thereby perform a protection operation to cope with the abnormal state of the circuit,
wherein the protection circuit further has:
a microcomputer protector that, on receiving a signal indicating that the microcomputer is in an abnormal state, transmits a second protection signal to thereby perform a protection operation to cope with the abnormal state of the microcomputer.

3. The protection circuit according to claim 2,
wherein the microcomputer protector, on receiving a signal indicating that the microcomputer is in a no-operation-clock state in which no operation clock of the microcomputer is present, transmits the second protection signal to thereby perform a protection operation to cope with the no-operation-clock state of the microcomputer.

4. The protection circuit according to claim 2 or 3,
wherein the first protection signal and the second protection signal are identical signals that are transmitted to a same constituent circuit.

5. An electronic device comprising:
a power supply circuit that feeds electric power to individual constituent circuits; and
the protection circuit according to any one of claims 2 to 4, the protection circuit being connected to the power supply circuit.
